**Europäisches Patentamt**

**European Patent Office**

**Office européen des brevets**

(11) Veröffentlichungsnummer: **0 143 331**
**B1**

(12) **EUROPÄISCHE PATENTSCHRIFT**

(45) Veröffentlichungstag der Patentschrift:
16.08.89

(51) Int. Cl.⁴: **G 01 P 3/48**

(21) Anmeldenummer: **84112838.2**

(22) Anmeldetag: **25.10.84**

(54) Schaltungsanordnung zum Messen der Drehzahl eines genuteten Ankers einer Drehfeldmaschine.

(30) Priorität: **29.10.83 DE 3339299**

(43) Veröffentlichungstag der Anmeldung:
05.06.85 Patentblatt 85/23

(45) Bekanntmachung des Hinweises auf die Patenterteilung:
16.08.89 Patentblatt 89/33

(84) Benannte Vertragsstaaten:
**AT BE CH DE FR GB IT LI LU NL SE**

(56) Entgegenhaltungen:
**DE-A- 2 355 787**
**FR-A- 2 095 378**
**FR-A- 2 479 474**
**FR-A- 2 507 782**
**US-A- 3 439 245**

(73) Patentinhaber: **Schröcker, Rainer, Dipl.-Ing., Obere Burghalde 47, D-7250 Leonberg (DE)**

(72) Erfinder: **Schröcker, Rainer, Dipl.-Ing., Obere Burghalde 47, D-7250 Leonberg (DE)**

(74) Vertreter: **Rüger, Rudolf, Dr.-Ing. et al, Webergasse 3 Postfach 348, D-7300 Esslingen/Neckar (DE)**

ACTORUM AG

**Beschreibung**

Die Erfindung geht aus von einer Schaltungsanordnung zum Messen der Drehzahl eines genuteten Ankers einer Drehfeldmaschine mit den Merkmalen des Oberbegriffs der Ansprüche 1 oder 2.

Aus der DE-A-20 30 457 ist eine Vorrichtung für Drehzahlüberwachung von Kreiseln bekannt, die das Erreichen der Nenndrehzahl anzeigt. Bei dieser Vorrichtung wird von dem Umstand Gebrauch gemacht, daß die Nuten des Ankers der Drehfeldmaschine Schwankungen des magnetischen Widerstandes im Ständer hervorrufen, was wiederum zu Strom- bzw. Spannungsschwankungen in der Versorgungsspannung bzw. dem Versorgungsstrom für den Ständer führt. Die Grundfrequenz dieses von den Ankernuten hervorgerufenen Frequenzsignals ist der Drehzahl und den Ankernuten proportional und wird deswegen bei der bekannten Vorrichtung dazu verwendet, das Erreichen der Nenndrehzahl des Kreises zu erkennen.

Dieses Frequenzsignal ist das eigentliche Nutzsignal, dem jedoch Störsignale überlagert sind. Das Störsignal mit der größten Amplitude ist hierbei die den Kreisel speisende Wechselspannung einschließlich der ungradzahligen Oberwellen, die durch die Eisenteile im Stator des Kreisels hervorgerufen werden. Um das drehzahlproportionale Frequenzsignal von den Störsignalen abzutrennen, ist bei der bekannten Vorrichtung ein angezapfter Parallelschwingkreis vorgesehen, der auf eine Frequenz abgestimmt ist, die der Frequenz des drehzahlproportionalen Signals bei Erreichen der Nennfrequenz entspricht.

Infolge der hohen Kreisgüte, die unter anderem durch Anzapfen des Parallelschwingkreises zustandekommt, wird eine sehr schmalbandige Filterschaltung erhalten, die an ihrem Ausgang tatsächlich nur dann ein Signal abgibt, wenn das speisende Signal im schmalbandigen Durchlaßbereich des Schwingkreises liegt.

Die bekannte Vorrichtung ist deshalb auch nicht dazu geeignet, die Drehzahl des Kreises in einem weiten Bereich unterhalb der Nenndrehzahl zu messen.

Auch bei einer größeren Bandbreite der Filterschaltung würden hier Schwierigkeiten auftreten, weil dann in den Durchlaßbereich fallende Frequenzanteile der Störsignale ebenfalls ungeschwächt durchgelassen werden würden und die nachfolgende Auswerteschaltung irritieren.

Aus der DE-A-31 11 819 ist ein weiteres Verfahren zur Ermittlung der Drehzahl eines Asynchronmotors bekannt, das das durch den Schlupf des Ankers hervorgerufene Signal zur Drehzahlmessung heranzieht. Bei der dort beschriebenen Schaltung ist deswegen in eine der drei Stromzuleitungen für den dreiphasigen Asynchronmotor ein Stromwandler geschaltet, dessen Ausgang an den Eingang eines Bandpasses angeschlossen ist. Die Grenzfrequenzen des Bandpasses fallen mit je einem Oberton der Grundfrequenz des Motorstromes zusammen, wobei die Ordnung des Obertones zehn bzw. elf beträgt, während die Dämpfung des Bandpasses außerhalb des Durchlaßbereiches bei etwa 60 dB liegt. Das am Ausgang des Bandpasses erhaltene Frequenzgemisch gelangt in einen Hüllkurvendetektor, wo es entsprechend hüllkurvendemoduliert wird, wobei der Effekt ausgenutzt wird, daß die Frequenz des Hüllkurvensignals in einer vorausbestimmbaren Weise mit dem Schlupf zusammenhängt.

Wie sich aber weiter zeigen läßt, hängt auch die Amplitude des Schlupffrequenzsignals stark vom Schlupf des Asynchronmotors ab und geht gegen null, wenn der Schlupf verschwindet.

Da das bekannte Verfahren die Drehzahl des Asynchronmotors über den Schlupf ermittelt, kann es nur in Lastbereichen des Motors angewendet werden, bei denen ein erheblicher Schlupf auftritt, weil nämlich sonst, wie oben ausgeführt, die Amplitude des Frequenzsignals sehr schnell gegen null geht und obendrein auch die Schlupffrequenz gegen null geht. Bei Synchronismus ist die Schlupffrequenz null.

Auch eignet sich das bekannte Verfahren nicht zur Drehzahlmessung im Bremsbetrieb, bei dem sehr verwickelte Verhältnisse zwischen der Ankerdrehzahl und der Schlupffrequenz vorliegen, weshalb das Ausgangssignal des Hüllkurvendetektors nicht mehr ohne weiteres zur Drehzahlmessung herangezogen werden kann.

Aufgabe der Erfindung ist es deshalb, die eingangs genannte Schaltungsanordnung derart weiterzubilden, daß die Drehzahl des Ankers einer Drehfeldmaschine ohne Ermittlung des Schlupfes im wesentlichen unmittelbar aus den Signalspannungen und Strömen der Ständerwicklungen über einen weiten Drehzahlbereich gemessen werden kann.

Erfindungsgemäß wird diese Aufgabe durch die Schaltungsanordnung mit den Merkmalen des Anspruches 1 oder 2 gelöst.

Infolge des verwendeten Netzwerkes bzw. des Signalabgriffes zwischen dem Motorsternpunkt und dem Netzmittelpunkt bzw. einem künstlichen Netzmittelpunkt, löschen sich die Frequenzanteile, die durch die speisende Wechselspannung hervorgerufen werden, gegenseitig weitgehend aus, und zwar sowohl im Motorbetrieb, wenn sämtliche Wicklungen mit einer reinen Wechselspannung beaufschlagt sind, als auch im Bremsbetrieb, bei dem eine oder mehrere Wicklungen mit einer Gleichspannung und überlagerten Wechselspannungen versorgt werden. Das durch die Ankernuten hervorgerufene Frequenzsignal tritt in jeder der Wicklungen mit Phasenlagen auf, die eine Unterdrückung durch das Netzwerk bzw. durch den Abgriff zwischen dem Motorsternpunkt und dem Netzmittelpunkt verhindert, so daß praktisch nur noch das gewünschte drehzahlproportionale Nutzsignal erhalten wird.

Es ergibt sich damit ein sehr weiter zu erfassender Drehzahlbereich, der von der Synchrondrehzahl bis fast zum Stillstand reicht, und zwar sowohl im Motor- als auch im Bremsbetrieb der Asynchronmaschine.

Im einfachsten Falle kann das Frequenzsignal als Spannungssignal an einer Wicklung abgegriffen werden. Wenn die Drehfeldmaschine im Bremsbetrieb gefahren wird, wird hierzu zweckmäßigerweise eine von dem Erregerstrom freie Wicklung verwendet, weil dann dem Nutzsignal kein so hohes Störsignal als Folge des Bremsgleichstromes überlagert ist.

Wenn hingegen das Frequenzsignal als Spannungssignal an zwei einenends miteinander verbundenen Wicklungen abgegriffen wird, kompensieren sich im Bremsfall, bei dem in der Regel mit phasenangeschnittenem halbwellengleichgerichtetem Wechselstrom gearbeitet wird, die Wechselspannungskomponenten, so daß das an den beiden freien Enden der Wicklung abgegriffene Signal praktisch nurmehr die Nutzsignalkomponente enthält und eine zusätzliche Filterschaltung entbehrlich wird.

Es besteht aber auch die Möglichkeit, insbesondere bei im Dreieck geschalteten dreiphasigen Drehfeldmaschinen, das Frequenzsignal über wenigstens einen Stromwandler auszukoppeln, der in der Zuleitung für den Erregerstrom der jeweiligen Wicklung liegt, da in diesem Falle wegen des in der Regel niedrigen Innenwiderstandes des speisenden Stromnetzes das Nutzsignal nicht als Spannungssignal parallel zu einer Ständerwicklung abgegriffen werden kann.

Um ein möglichst günstiges Störnutzsignalverhältnis zu bekommen, ist es zweckmäßig, wenn beide Wicklungen von dem gleichen Erregerstrom durchflossen sind, was zusätzliche, das Störsignalverhältnis verschlechternde Unsymmetrien vermeiden hilft. Es kann jedoch der Erregerstrom auch durch sämtliche Wicklungen fließen, wie dies bei einer im Dreieck geschalteten Drehfeldmaschine der Fall ist, die mit Gleichstrom gebremst wird.

In jedem Falle läßt sich die Schaltungsanordnung zur Ermittlung der Drehzahl sowohl verwenden, wenn der Erregerstrom zum Abbremsen des Ankers dient und eine Gleichkomponente aufweist oder wenn die Drehfeldmaschine im Motorbetrieb arbeitet und der Erregerstrom lediglich Wechselkomponenten enthält, wobei es ohne weiteres ersichtlich ist, daß eine Reihe der obigen Schaltungen nicht auf Dreiphasenasynchronmaschinen beschränkt sind, sondern beispielsweise auch bei Kondensatormotoren eingesetzt werden können.

Eine einfache Möglichkeit, den Störabstand zu verbessern, besteht in der Verwendung eines Filters, das an die Ständerwicklungen bzw. den Stromwandler angeschlossen ist. Dabei hat es sich als vorteilhaft herausgestellt, wenn das Filter mit einer Steilheit von etwa 36 dB pro Oktave gewählt wird, weil dies einen günstigen Kompromiß zwischen Einschwingzeit und Signaltrennung darstellt. Die Grenzfrequenz des als Hochpaß ausgebildeten Filters liegt, da das Nutzsignal innerhalb des interessierenden Drehzahlbereiches über der Netzfrequenz liegt, etwa bei dem dreifachen Wert der Grundfrequenz des Erregerstroms.

Die Verwendung eines Phasenschiebernetzwerkes mit zwei Eingängen hat den Vorteil, daß sich bereits aufgrund der Zusammenschaltung der beiden Eingangssignale eine weitgehende Kompensation der durch den Erreger- bzw. Netzstrom hervorgerufenen Signalamplitude ergibt. Dieses Phasenschiebernetzwerk enthält zumindest zwei Eingänge, die entweder entsprechenden Ständerwicklungen parallelgeschaltet sind oder in die an Stromwandlern abgegriffene Spannungen eingespeist werden, wobei die Stromwandler in den Stromzuführungsleitungen zweier Phasenwicklungen liegen. Die abgegriffenen Spannungen werden mit entsprechend um 180° gedrehter Phase einander überlagert, so daß lediglich die Frequenzanteile des Erregerstroms bzw. dessen Oberwellen unterdrückt werden.

Bei dieser Schaltungsanordnung mit Hochpaßfilter zum Abtrennen des Frequenzsignals liegt der Eingang des Hochpaßfilters parallel zu einer der Ständerwicklungen oder, falls die Ständerwicklung an eine Spannungsquelle mit sehr niedrigem Innenwiderstand, beispielsweise das normale Stromnetz angeschlossen ist, ist es zweckmäßig, wenn die Schaltungsanordnung einen Stromwandler enthält, dessen Ausgang an dem Eingang des Hochpaßfilters liegt, während der Stromwandler selbst in einer der Stromzuführungsleitungen zu einer der Ständerwicklungen eingeschaltet ist.

Bei einem anderen bevorzugten Ausführungsbeispiel enthält die Schaltungsanordnung ein Netzwerk mit zwei parallelen, je einen Eingang aufweisenden Signalpfaden, die ausgangsseitig an eine in dem Netzwerk vorhandene Verknüpfungsschaltung mit einem Ausgang angeschlossen sind. Jeder dieser beiden Signalpfade liegt eingangsseitig entweder parallel zu einer zugehörigen Ständerwicklung oder parallel zu dem Ausgang eines zugehörigen Stromwandlers, die bei einem anderen Ausführungsbeispiel ebenfalls zu dem Netzwerk gehören. Die Stromwandler des Netzwerkes sind in die Stromzuführungsleitungen zu den Ständerwicklungen geschaltet und erzeugen an ihrem Ausgang ein stromproportionales Signal, das in die Signalpfade eingespeist wird.

Um bei dem zweiten Ausführungsbeispiel ohne Filter zum Herausfiltern der durch den Erregerstrom erzeugten Frequenzen das Auslangen finden zu können, enthält zumindest einer der Signalpfade eine frequenzunabhängige Dämpfungseinrichtung, die derart bemessen ist, daß die Ausgangsspannung der Verknüpfungsschaltung minimal ist, wenn die beiden in die beiden Eingänge eingespeisten Signalspannungen hinsichtlich des Störsignals um 180° in der Phase gedreht sind, was beispielsweise beim Bremsbetrieb des Motors ohne weiteres erfüllt ist.

Wenn hingegen die unerwünschten Frequenzsignale nicht um 180° gegeneinander in der Phase gedreht, d.h. gegenphasig sind, enthält zweckmäßigerweise einer der beiden Signalpfade des Netzwerkes einen Phasenschieber, der wiederum so eingestellt ist, daß die Ausgangsspannung der Verknüpfungsschaltung minimal ist, d.h. der so eingestellt ist, daß die Phasen der unerwünschten Wechselkomponenten an den beiden Eingängen des Netzwerkes um 180° gegeneinander gedreht werden, so daß sie sich an der Verknüpfungsschaltung gegenseitig auslöschen.

Falls größere Phasendrehungen notwendig sind, kann in jedem der beiden Signalpfade ein Phasenschieber vorgesehen sein, von denen der eine vorwärts und der andere rückwärts dreht, so daß insgesamt die erwünschte 180°-Phasendrehung zustandekommt. In jedem Falle kann zum Einsparen von Bauelementen der Phasenschieber selbst, der im einfachsten Falle aus einem Kondensator und einem Widerstand besteht, als Spannungsteiler ausgebildet sein.

Eine weitere Vereinfachung wird erhalten, wenn der eine Signalpfad als frequenzunabhängige Dämpfungseinrichtung einen ohmschen Längswiderstand und der andere Signalpfad als Phasenschieber einen kapazitiven Längswiderstand enthält, während die Verknüpfungsschaltung aus einem ohmschen Querwiderstand besteht, weil auf diese Weise sehr einfach die Amplituden und die Phasenanpassung vorgenommen werden kann. Wenn keine Phasenanpassung erforderlich ist, können die Längswiderstände in den beiden Signalpfaden auch jeweils als ohmsche Längswiderstände ausgeführt sein.

Sehr einfache Verhältnisse ergeben sich, wenn je ein Eingang des Netzwerks zu einer Ständerwicklung parallelgeschaltet ist, wobei beide Ständerwicklungen hintereinandergeschaltet und von einem gemeinsamen Erregerstrom durchflossen sind.

Da möglicherweise insbesondere das über das Netzwerk erhaltene Frequenzsignal störende höherfrequente Signalanteile enthält, weist die Schaltungsanordnung zum Abtrennen von durch den Erregerstrom verursachten Signalanteilen, deren Amplitude kleiner ist als die Amplitude der Grundfrequenz des durch die Ankernuten hervorgerufenen Frequenzsignals eine Schaltstufe auf, wobei die Frequenz des Ausgangssignals der Schaltstufe der Ankerdrehzahl proportional ist. Im einfachsten Fall besteht diese Schaltstufe aus einem mit einer Schalthysterese behafteten Kippglied, beispielsweise einem Schmitt-Trigger oder auch einem einstufigen Zähler, dessen beide Schaltschwellen einen entsprechenden Abstand voneinander aufweisen.

Diese Schaltstufe ist eingangsseitig an den Ausgang des Filters bzw. des Phasenschiebernetzwerkes angeschlossen.

Wenn hingegen die Drehzahlmessung zwischen dem Sternpunkt des Asynchronmotors und dem künstlichen Sternpunkt des Netzes oder dessen Mittelpunkt erfolgt, kann die Schaltstufe auch unmittelbar eingangsseitig zwischen die genannten Punkte geschaltet sein.

In der Zeichnung sind Ausführungsbeispiele des Gegenstandes der Erfindung dargestellt. Es zeigen:

Fig. 1 eine Schaltungsanordnung zur Messung der Drehzahl einer mit Gleichstrom gebremsten Drehfeldmaschine, in einem Blockschaltbild,

Fig. 2 die Schaltungsanordnung nach Fig. 1 zum Messen der Drehzahl einer als Motor arbeitenden 3-phasigen Drehfeldmaschine, in einem Blockdiagramm,

Fig. 3 eine Schaltungsanordnung mit einem Kompensationsnetzwerk zur Messung der Drehzahl einer Drehfeldmaschine, in einem Blockschaltbild,

Fig. 4 das Schaltbild der als Blockdiagramm dargestellten Schaltungsanordnung nach Fig. 3,

Fig. 5 eine Schaltungsanordnung mit einem Kompensationsnetzwerk, zur Messung der Drehzahl einer im Motorbetrieb arbeitenden Drehfeldmaschine, in einem Blockdiagramm,

Fig. 6 das Schaltbild der Schaltungsanordnung nach Fig. 5,

Fig. 7 eine Schaltungsanordnung mit einem Kompensationsnetzwerk, zur Messung der Drehzahl einer im Motorbetrieb arbeitenden und im Dreieck geschalteten 3-phasigen Drehfeldmaschine, in einem Blockschaltbild, und

Fig. 8 eine Schaltungsanordnung zur Messung der Drehzahl einer im Stern geschalteten und im Motorbetrieb arbeitenden 3-phasigen Drehfeldmaschine.

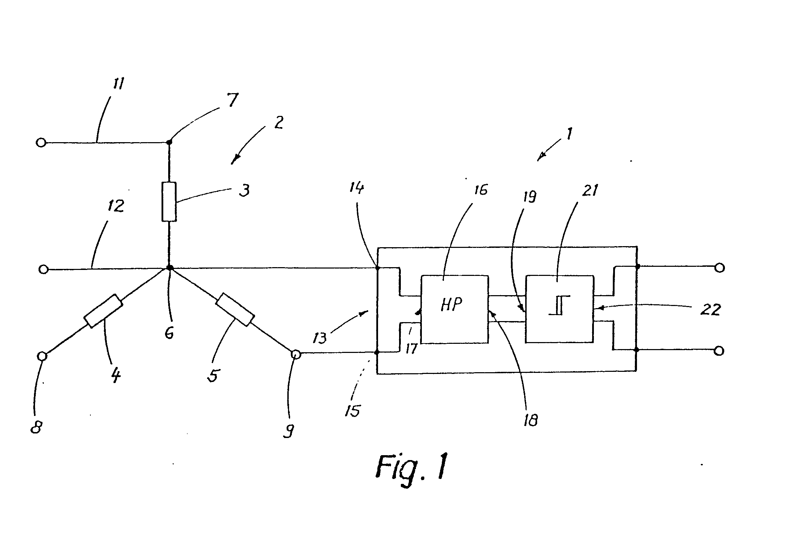

In Fig. 1 ist eine Schaltungsanordnung 1 zum Erzeugen eines der Drehzahl einer Drehfeldmaschine 2 proportionalen Signals veranschaulicht. Bei der gezeigten Drehfeldmaschine 2 handelt es sich um einen 3-Phasen-Asynchronmotor mit genutetem ferromagnetischem Anker und drei Strängen 3, 4 und 5, die – wie veranschaulicht – im Stern geschaltet sind, d.h. sie liegen einenends an einem Sternpunkt 6, während ihre anderen Anschlüsse 7, 8 und 9 nicht miteinander in Verbindung stehen.

In den Strang 3 wird über Leitungen 11, 12 ein Gleichstrom eingespeist, mit dem der Anker der Drehfeldmaschine 2 abgebremst werden soll. Der über die Leitungen 11 und 12 zugeführte Gleichstrom stammt aus einer nicht weiter veranschaulichten, an sich bekannten Gleichspannungsquelle und wird bspw. durch Halbwellengleichrichtung aus der Netzspannung zum Betreiben der Drehfeldmaschine 2 erzeugt.

Die Schaltungsanordnung 1 weist zwei ihren Eingang 13 bildende Eingangsklemmen 14 und 15 auf, mit denen sie über entsprechende Verbindungsleitungen an den Sternpunkt 6 sowie das Strangende 9 des Stranges 5 angeschlossen ist, d.h. der Eingang 13 der Schaltungsanordnung 1 ist parallel zum Strang 5 geschaltet. Die Schaltungsanordnung 1 selbst enthält ein Hochpaßfilter 16, das mit seinem Eingang 17 parallel zu den Klemmen 14 und 15 geschaltet ist. Ein Ausgang 18 des Hochpaßfilters 16 liegt an einem Eingang 19 einer Schaltstufe 21, deren Ausgang 22, gleichzeitig den Ausgang der Schaltungsanordnung 1 bildet.

Die insoweit beschriebene Schaltung arbeitet folgendermaßen:

Wenn zum Abbremsen des Ankers der Drehfeldmaschine 2 über die Leitungen 11 und 12 ein halbwellengleichgerichteter Wechselstrom mit einer Grundfrequenz von 50 Hz in den Strang 3 eingespeist wird, entsteht in der Drehfeldmaschine 2 ein entsprechendes Magnetfeld mit einer Gleichkomponente entsprechend dem Gleichanteil aus dem eingespeisten Gleichstrom. Ferner entstehen magnetische Wechselfelder, die den Oberwellen des in den Strang 3 eingespeisten mehr oder weniger geglätteten Gleichstroms entsprechen. Aufgrund der Verkettung der Stränge 3, 4 und 5 in der Drehfeldmaschine 2 wird in dem Strang 5 eine Wechselspannung induziert, deren Grundfrequenz der Grundfrequenz der Oberwellen des durch den Strang 3 fließenden ungeglätteten Gleichstroms entspricht, bei dem erwähnten Ausführungsbeispiel also eine Spannung mit einer Grundfrequenz von 50 Hz. Wegen der Halbwellengleichrichtung entstehen jedoch auch Oberwellen, deren Amplitude mit höherer Ordnungszahl jedoch sehr rasch abfällt, weshalb nur die zweite und die dritte Harmonische (100 und 150 Hz) eine nennenswerte Amplitude aufweisen.

Der bei Beginn des Bremsvorgangs noch mit Nenndrehzahl rotierende Anker der Drehfeldmaschine 2 verursacht eine zusätzliche Modulation des durch den Strang 3 erzeugten Magnetfeldes, und zwar aufgrund seiner Nutung, was eine entsprechende Änderung des magnetischen Widerstands im magnetischen Kreis der Drehfeldmaschine 2 und damit entsprechend auch eine periodische Änderung des magnetischen Flusses in dem Strang 5 bewirkt. Dies führt dazu, daß den oben erwähnten Wechselspannungen, deren Frequenzen sich entsprechend der Fourier-Analyse des durch den Strang 3 fließenden Stromes ergeben, noch wenigstens eine weitere Wechselspannung überlagert ist, deren Frequenz abhängig von der Zahl der Ankernuten und der Drehzahlen des Ankers ist. Weil darüber hinaus die Ankernuten keine rein sinusförmige Änderung des magnetischen Widerstandes hervorrufen, enthält dieses drehzahlabhängige Frequenzsignal weitere Oberwellen, die im ganzzahligen Verhältnis zu der durch die Ankernuten hervorgerufenen Grundfrequenz stehen. Im einzelnen besteht zwischen der Grundfrequenz des Frequenzsignals, das durch die Ankernuten hervorgerufen wird, und der Drehzahl des Ankers der nachfolgende Zusammenhang:

$$f_L = \frac{n_L \cdot Z}{60}$$

wobei $f_L$ die Grundfrequenz des durch die Ankernuten hervorgerufenen Frequenzsignals in Hz, $n_L$ die Drehzahl des Ankers in Umdrehungen pro Minute, und Z die Anzahl der Ankernuten bedeuten. Durch einfache Umformung erhält man somit die Drehzahl des Ankers aus dem durch die Ankernuten hervorgerufenen Frequenzsignal, wobei lediglich die Grundfrequenz ausgewertet wird, da deren Amplitude sehr viel größer als die der zugehörigen Harmonischen ist. Die Drehzahl ergibt sich damit zu:

$$n_L = \frac{f_L \cdot 60}{Z}$$

Über den Proportionalitätsfaktor 60/Z ist also die Grundfrequenz des durch die Ankernuten hervorgerufenen Frequenzsignals proportional der Drehzahl des Ankers, und sie kann leicht als Kenngröße für die Motordrehzahl verwendet werden.

Die in dem Strang 5 induzierte Spannung, die das oben erläuterte Frequenzgemisch enthält, gelangt in den Eingang 13 der Schaltungsanordnung 1 und damit auch in den Eingang 17 des Hochpaßfilters 16. Dieses Hochpaßfilter ist ein Butterworth-Filter sechster Ordnung mit einer Flankensteilheit von 36 dB/Oktave, wobei die Grenzfrequenz des Hochpaßfilters 16 je nach zu erwartendem Amplitudenverhältnis zwischen der zweiten bzw. dritten Oberwelle aufgrund des ungeglätteten Gleichstroms im Strang 3 und der Amplitude der Grundfrequenz des Frequenzsignals, das durch die Ankernuten erzeugt wird, entweder geringfügig über dem zweifachen oder geringfügig über dem dreifachen Wert der Grundfrequenz des durch den Strang 3 fließenden Stromes gelegt wird. Vorzugsweise ist die Grenzfrequenz des Hochpaßfilters 16 gleich oder geringfügig größer als der dreifache Wert der Grundfrequenz des Stroms im Strang 3, d.h. bei einem halbwellengleichgerichteten Wechselstrom von 50 Hz liegt die Grenzfrequenz des Hochpaßfilters 16 bei 150 Hz.

An dem Ausgang 18 des Hochpaßfilters 16 wird so ein Frequenzsignal erhalten, das von niederfrequenteren Störsignalen befreit ist. Da die höherfrequenten Störsignale allesamt eine kleinere Amplitude aufweisen als die Grundfrequenz des durch die Ankernuten hervorgerufenen Frequenzsignals, sind sie nicht weiter störend und brauchen auch nicht weiter ausgefiltert zu werden.

Das aus dem Hochpaßfilter 16 kommende Signal gelangt in den Eingang 19 der Schaltstufe 21, die eine Schaltcharakteristik wie ein Schmitt-Trigger aufweist, jedoch eine geringe Schalthysterese hat. Die Schaltstufe 21 dient dazu, das aus dem Hochpaßfilter 16 kommende Signal in ein Rechtecksignal gleicher Frequenz, jedoch konstanter Amplitude umzuwandeln. Die Amplitude des Signals aus dem Hochpaßfilter 16 ändert sich nämlich zunächst einmal wenigstens mit der Drehzahl des Ankers der Drehfeldmaschine 2, d.h. mit abnehmender Drehzahl sinkt auch die Amplitude der Grundfrequenz des von den Ankernuten hervorgerufenen Frequenzsignals. Darüber hinaus ist die Amplitude des Frequenzsignals auch von der Größe des Stroms durch den Strang 3 abhängig insofern, als die Amplitude des gewünschten Frequenzsignals mit abnehmendem Erregerstrom im Strang 3 ebenfalls sinkt. Wenn schließlich der Erregerstrom durch den Strang 3 in bekannter Weise durch eine Phasenanschnittsteuerung eingestellt wird, ist dem durch die Ankernuten hervorgerufenen Frequenzsignal zusätzlich eine Amplitudenmodulation überlagert, die dementsprechend auch an dem Ausgang 18 des Hochpaßfilters 16 erscheint und gegebenenfalls störend ist. Mit Hilfe der nachgeschalteten Schaltstufe 21 werden die aus den obengenannten Gründen auftretenden Amplitudenschwankungen beseitigt, so daß an dem Ausgang 22 der Schaltstufe 21 ein Rechtecksignal abgegriffen werden kann, dessen Frequenz der Grundfrequenz des durch die Ankernuten hervorgerufenen Frequenzsignals entspricht.

Dieses so erhaltene Signal, bei dem die Frequenz der Ankerdrehzahl der Drehfeldmaschine 2 direkt proportional ist, kann nun in bekannter Weise, bspw. zur unmittelbaren Drehzahlanzeige, verwendet werden, indem an den Ausgang 22 der Schaltstufe 21, d.h. an den Ausgang der Schaltungsanordnung 1, ein digitaler Frequenzzähler angeschlossen ist, der so abgestimmt ist, daß er den Proportionalitätsfaktor berücksichtigt und unmittelbar die Drehzahl des Ankers der Drehfeldmaschine 2 anzeigt.

Anstatt, wie veranschaulicht, das zur Drehzahlmessung verwendete Frequenzsignal, das durch die Ankernuten hervorgerufen wird, als Spannungsgröße an einem von dem Bremsstrom freien Strang, nämlich – wie gezeigt – dem Strang 5 abzugreifen, besteht auch die Möglichkeit, in die Stromzuleitung zu dem Strang 3 einen zu der Schaltungsanordnung 1 gehörenden Stromwandler einzuschalten, dessen Sekundärseite an dem Eingang 17 des Hochpaßfilters 16 liegt, da das auszuwertende Frequenzsignal auch dem durch den Strang 3 fließenden Strom überlagert ist. Dieses Frequenzsignal entsteht nämlich immer dann, wenn die Ankernutenzahl kein ganzzahliges Vielfaches der Polzahl der Drehfeldmaschine 2 ist.

Da es ersichtlicherweise bei Fig. 1 auf die Beschaltung des Strangs 4 nicht ankommt, ist es auch klar, daß die Schaltungsanordnung 1 auch bei Kondensatormotoren eingesetzt werden kann, die lediglich zwei um 90° gegeneinander versetzte Stränge aufweisen.

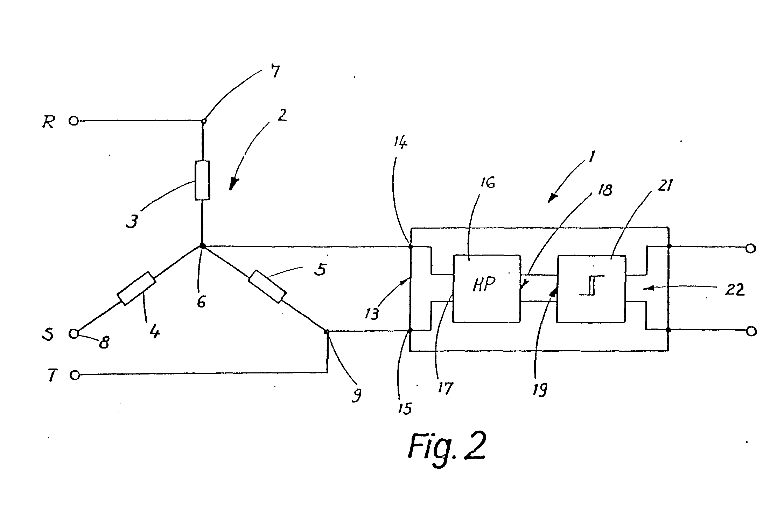

In Fig. 2 ist ein weiteres Anwendungsbeispiel der Schaltungsanordnung 1 nach Fig. 1 veranschaulicht, die nunmehr dazu dient, die Drehzahl des Ankers der Drehfeldmaschine 2 zu messen, die jedoch hier im Motorbetrieb arbeitet, weshalb deren wiederum im Stern geschaltete Stränge 3, 4 und 5 mit ihren freien Enden 7, 8 und 9 an die drei Phasen R, S und T eines Drehstromnetzes angeschlossen sind. Die Schaltungsanordnung 1 ist wieder genauso aufgebaut wie die Schaltungsanordnung 1 nach Fig. 1 und deshalb nicht mehr im einzelnen erläutert. Der Anschluß der Schaltungsanordnung 1 erfolgt bei im Motorbetrieb arbeitender Drehfeldmaschine 2, die im Stern geschaltet ist, wiederum in der Weise, daß der Eingang 13 der Schaltungsanordnung 1 zu einem der Stränge 3, 4 oder 5 parallel geschaltet ist. Im übrigen ist die Funktionsweise wie oben beschrieben, d.h. an dem Ausgang 22 steht ein Rechtecksignal an, dessen Frequenz gleich der Grundfrequenz des von den Ankernuten hervorgerufenen Frequenzsignals ist und das damit der Drehzahl des Ankers der Drehfeldmaschine 2, wie beschrieben, direkt proportional ist.

Falls die Drehfeldmaschine 2 nicht, wie in Fig. 2 gezeigt, im Stern geschaltet ist, wobei der Sternpunkt 6 im übrigen nicht mit dem Netz verbunden ist, sondern im Dreieck geschaltet ist, oder falls der Sternpunkt 6 mit dem Mittelpunkt des Netzes verbunden ist, kann – wie oben beschrieben – die Schaltungsanordnung 1 um einen Stromwandler erweitert werden, dessen Sekundärseite an den Eingang 17 des Hochpaßfilters 16 angeschlossen ist und dessen Primärseite in einer der Stromzuführungsleitungen der Phasen R, S oder T liegt.

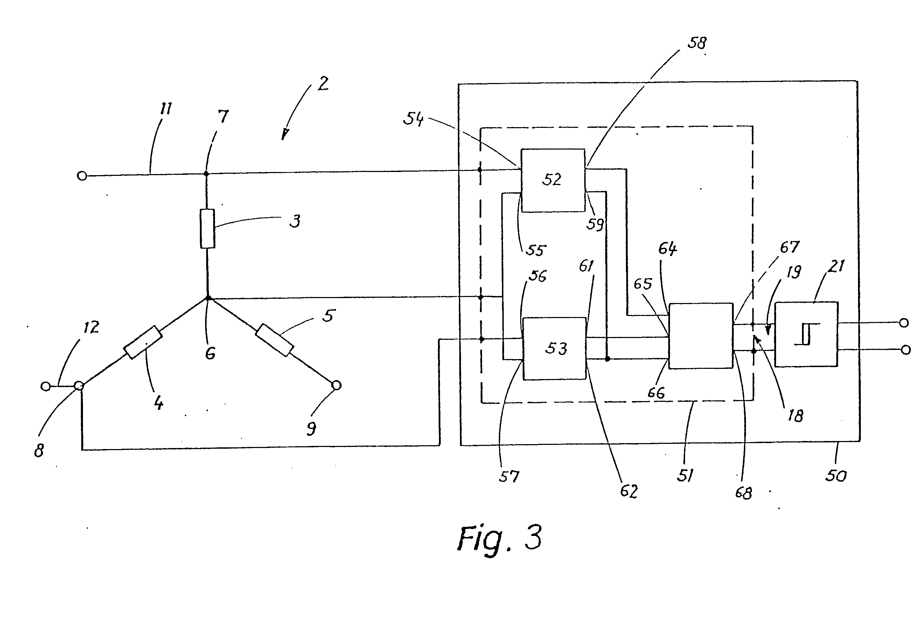

Während bei dem Ausführungsbeispiel der Schaltungsanordnung 1 nach den Fig. 1 bis 2 zum Unterdrücken der unerwünschten Frequenzsignale zufolge der Oberwellen auf dem Bremsgleichstrom bzw. des Motorstroms im Motorbetriebsfalle das Hochpaßfilter 16 verwendet wird, sieht die in den Fig. 3 bis 7 gezeigte Schaltungsanordnung zum Unterdrücken der unerwünschten Frequenzsignale und Abtrennen des durch die Ankernuten hervorgerufenen Frequenzsignals, mit dem die Motordrehzahl zu messen ist, ein Kompensationsnetzwerk 51 vor. Die Drehfeldmaschine 2 ist, wie vorher erläutert, aufgebaut, weshalb hierbei auch die gleichen Bezugszeichen verwendet werden. Die damit gekennzeichneten Bauelemente der Drehfeldmaschine 2 sind nicht erneut beschrieben.

Das Kompensationsnetzwerk 51 enthält zwei parallele Signalpfade 52 und 53 mit je zwei Eingangsklemmen 54, 55 bzw. 56, 57 und je zwei Ausgangsklemmen 58, 59 bzw. 61 und 62. Die beiden Eingangsklemmen 54, 55 bzw. 56 und 57 der beiden Signalpfade 52 und 53 bilden deren Eingang, der, wie in Fig. 3 gezeigt, parallel zu einem jeweils zugehörigen Strang geschaltet ist, d.h. der Signalpfad 52 liegt mit seinen Eingangsklemmen 54 und 55 an dem Sternpunkt 6 und dem Stranganschluß 7 des Strangs 3, wohingegen der Signalpfad 53 mit seiner Eingangsklemme 57 an den Sternpunkt 6 und mit seiner Eingangsklemme 56 an den Stranganschluß 8 des Strangs 4 angekoppelt ist. Die aus den beiden Signalpfaden 52 und 53 kommenden Signale gelangen in eine Verknüpfungsschaltung 63 mit insgesamt drei Eingangsanschlüssen 64, 65 und 66 sowie zwei Ausgangsanschlüssen 67 und 68. Im einzelnen ist dabei die Ausgangsklemme 58 des Signalpfades 52 mit der Eingangsklemme 64 und die Ausgangsklemme 61 des Signalpfades 53 mit der Eingangsklemme 65 verbunden, während die beiden Ausgangsklemmen 59 und 62 gemeinsam auf die Eingangsklemme 66 geschaltet sind. Die beiden Ausgangsklemmen 67 und 68 der Verknüpfungsschaltung 63, die dazu dient, die beiden Signale aus den Signalpfaden 52 und 53 einander zu überlagern, bilden den Ausgang des Netzwerkes 51, der insoweit dem Ausgang 18 des Filters 16 entspricht und deshalb ebenfalls mit 18 bezeichnet ist. Der Ausgang 18 des Netzwerkes 51 liegt an dem Eingang 19 der nachfolgenden Schaltstufe 21, die, wie vorher beschrieben, aufgebaut sein kann.

Die Funktionsweise der Schaltung nach Fig. 3 mit der Schaltungsanordnung 50 zum Erzeugen des drehzahlproportionalen Frequenzsignals arbeitet wie folgt:

Über die Leitungen 11 und 12 wird wiederum ein Bremsgleichstrom in die Drehfeldmaschine 2 eingespeist, der jedoch im Gegensatz zu dem vorherigen Ausführungsbeispiel durch die bezüglich des Bremsgleichstromes in Serie geschalteten Stränge 3 und 4 hindurchfließt. Dieser mehr oder weniger wellige Bremsgleichstrom erzeugt an den beiden Strängen 3 und 4 bezüglich des Sternpunktes 6 gegenphasige Gleich- und Wechselspannungen mit jeweils gleicher Amplitude, da die beiden Stränge 3 und 4 gleiche elektrische Kennwerte aufweisen. Da die beiden Stränge 3 und 4 aber räumlich um 120° gegeneinander versetzt sind, erzeugt der sich drehende Anker der Drehfeldmaschine 2 aufgrund seiner Nutung zusätzliche Frequenzsignale in den Strängen 3 und 4, die jedoch nicht wie die Frequenzsignale infolge des Bremsgleichstroms gegenphasig, sondern um ca. 120° gegeneinander gedreht sind.

Das Frequenzsignal aus dem Strang 3, das auch das durch die Ankernuten hervorgerufene Frequenzsignal enthält, gelangt in den Signalpfad 52, während das Frequenzsignal aus dem Strang 4, dem ebenfalls das durch die Ankernuten hervorgerufene Frequenzsignal überlagert ist, in den Signalpfad 53 gelangt. Aus den beiden Signalpfaden 52 und 53 kommen die beiden Frequenzsignale zu der Verknüpfungsschaltung 63, in der sie miteinander überlagert werden, wodurch sich an dieser Stelle alle Signalanteile auslöschen, die die gleiche Amplitude und die gleiche Frequenz, jedoch entgegengesetzte Phasenlage aufweisen. Signalanteile mit unterschiedlicher Frequenz, unterschiedlicher Amplitude oder von 180° abweichender Phasenlage gehen mehr oder weniger geschwächt durch die Verknüpfungsschaltung 63 hindurch.

Da, wie vorhin ausgeführt, alle Frequenzsignale, die durch den Bremsgleichstrom hervorgerufen werden, bezüglich des Sternpunktes 6 gegenphasig sind und gleiche Amplitude aufweisen, löschen sie sich in der Verknüpfungsschaltung 63 gegenseitig aus, denn die Signalpfade 52 und 53 ändern weder deren relative Phasenlage noch deren relative Amplitude. Im gezeigten Beispiel dienen sie vielmehr der rückwärtigen Entkopplung der Frequenzsignale, die in die Schaltungsanordnung zur Erzeugung des drehzahlproportionalen Frequenzsignals eingespeist werden.

Die in den beiden Strängen 3 und 4 durch die Ankernuten hervorgerufenen Frequenzsignale weisen aber gegeneinander eine von 180° verschiedene Phasenlage auf, womit sie sich in der Verknüpfungsschaltung 63 gegenseitig nicht auslöschen, sondern die Verknüpfungsschaltung 63 im wesentlichen ungeschwächt durchlaufen. Am Ausgang 18 der Verknüpfungsschaltung 63, d.h. am Ausgang des Netzwerkes 51, steht somit ein Frequenzsignal zur Verfügung, das im wesentlichen nurmehr das durch die Ankernuten hervorgerufene Frequenzsignal enthält, wobei dessen Grundfrequenz die größte Amplitude aufweist und somit ausschließlich die nachfolgende Schaltstufe 21 mit Schmitt-Trigger-Charakteristik aussteuert. Am Ausgang 22 der Schaltstufe 21 und damit am Ausgang der Schaltungsanordnung 50 steht also ein Rechtecksignal zur Verfügung, dessen Frequenz gleich der Grundfrequenz des durch die Ankernuten hervorgerufenen Frequenzsignals ist und dessen Amplitude konstant ist. Dabei kann durch entsprechende Wahl der Hysterese der Schaltstufe 21 verhindert werden, daß eventuelle höherfrequente Störungen mit kleiner Amplitude das Ausgangssignal der Schaltstufe 21 stören.

Die Schaltungsanordnung 50 mit dem Netzwerk 51 hat insbesondere Vorteile dann, wenn der Bremsgleichstrom für die Drehfeldmaschine 2 mit Hilfe einer Phasenanschnittsteuerung eingestellt wird, weil sie gleichzeitig recht wirksam Amplitudenmodulationen, die durch den Phasenanschnitt in den Strängen 3 und 4 auftreten, eliminiert, was sonst wegen der möglichen Verschiebung des Gleichspannungsnullpunktes zu einer Frequenzmodulation am Ausgang der Schaltungsanordnung 50 zur Erzeugung eines drehzahlproportionalen Frequenzsignals führen könnte.

Fig. 3 läßt darüber hinaus erkennen, daß die Schaltungsanordnung 50 auch angewendet werden kann, wenn der Strang 5 nicht, wie gezeigt, geschaltet ist, sondern zwischen den Stranganschlüssen 7 und 8 angeschlossen ist, so daß die Drehfeldmaschine 2 insgesamt im Dreieck geschaltet ist. Ferner läßt sich aus Fig. 3 auch entnehmen, daß die Drehfeldmaschine 2 keinesfalls ein Dreiphasenasynchronmotor zu sein braucht, sondern auch ein Kondensatormotor sein kann, an den die Schaltungsanordnung 50, wie gezeigt, angeschlossen ist.

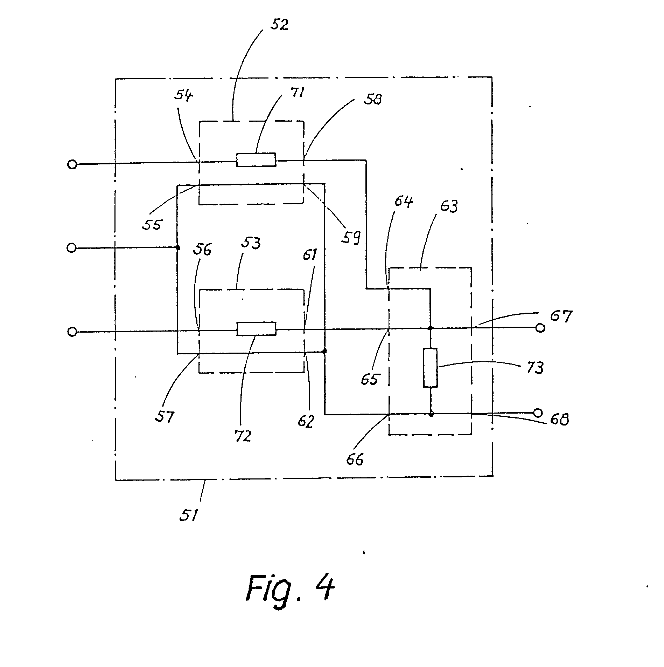

Der Schaltungsaufbau des Netzwerks 51, das in Fig. 3 lediglich als Blockschaltbild wiedergegeben ist, zeigt Fig. 4. Hiernach enthält der Signalpfad 52 als frequenzunabhängige Dämpfungseinrichtung zwischen seinen beiden Klemmen 54 und 58 einen Längswiderstand 71, während die beiden Klemmen 55 und 59 unmittelbar durchverdrahtet sind. Entsprechendes gilt auch für den Signalpfad 53, bei dem die beiden Klemmen 56 und 61 über einen Längswiderstand 72 miteinander verbunden sind, während die beiden Klemmen 57 und 62 unmittelbar durchverdrahtet sind, so daß sowohl der Signalpfad 52 als auch der Signalpfad 53 einen sogenannten Dreipol bilden. Die Verknüpfungsschaltung 63 besteht aus lediglich einem Querwiderstand 73, der einenends an die Eingangsklemme 66 und anderenends an die beiden Eingangsklemmen 64 und 65 angeschlossen ist.

Falls wegen unterschiedlicher Wicklungen der zu messenden Maschine die durch den Bremsgleichstrom induzierten Spannungen lediglich in der Amplitude unterschiedlich sind, kann dies durch entsprechende Wahl der Längswiderstände 71 und 72 ausgeglichen werden, so daß die an den Strängen abgegriffenen Spannungen hinsichtlich des zu unterdrückenden Signalanteils durch die Wahl der Werte der Längswiderstände 71 und 72 auf die gleiche Amplitude gebracht werden können. Bei ansonsten symmetrischen Verhältnissen dienen die beiden Längswiderstände 71 und 72 lediglich dazu, die Eingänge 54 und 56 der beiden Signalpfade 52 und 53 so voneinander zu entkoppeln, daß durch die Verknüpfungsschaltung 63 kein Kurzschluß zwischen den Stranganschlüssen 7 und 8 zustandekommt.

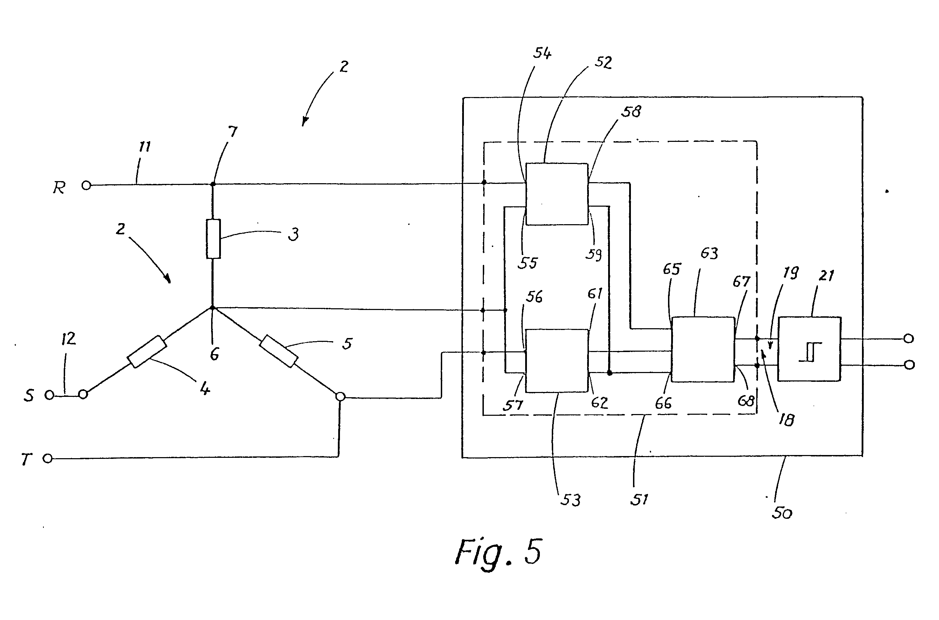

Wenn die Drehfeldmaschine 2 nicht im Bremsbetrieb, sondern im Motorbetrieb arbeitet, bei dem die Spannungen an den Strängen einer im Stern geschalteten dreiphasigen Drehfeldmaschine 2 um 120° gegeneinander in der Phase versetzt sind, ist es erforderlich, wenigstens in einem der beiden Signalpfade 52 oder 53 einen Phasenschieber vorzusehen, beispielsweise in dem Signalpfade 53, wie dies in Fig. 5 gezeigt ist. Wenn der Phasenschieber, in dem Falle der Signalpfad 53, eine zusätzliche Dämpfung einführt, muß auch eine entsprechende Dämpfung in dem anderen Signalpfad, d.h. im Signalpfad 52 vorgesehen werden.

Zur Erläuterung der Funktionsweise der Schaltungsanordnung 50 zur Erzeugung eines drehzahlproportionalen Ausgangssignals, bei der, wie in Fig. 5 gezeigt, die Drehfeldmaschine 2 im Stern geschaltet und an ein entsprechendes Drehstromnetz angeschlossen ist, sei angenommen, daß die Spannung an dem Strang 5 der Spannung an dem Strang 3 um 120° vorauseilt. Damit sich in der Verknüpfungsschaltung 63 die Strangspannungen, die durch das Drehstromnetz erzeugt werden, gegenseitig auslöschen, ist in dem Signalpfad 53 ein Phasenschieber vorgesehen, der die ankommende Spannung um 60° verzögert, so daß an dem Ausgang der beiden Signalpfade 52 und 53 bezüglich des Frequenzsignals, das durch die Versorgungsspannung aus dem Drehstromnetz entsteht, eine 180°-Phasendrehung zustandekommt. Das Frequenzsignal mit der größten Amplitude löscht sich auf diese Weise in der Verknüpfungsschaltung 63 aus, in der die Ausgangsspannungen der beiden Signalpfade 52 und 53 miteinander überlagert werden, wie dies oben beschrieben ist. Besonders vorteilhaft ist es, wenn man in dem Signalpfad 53 als Phasenschieber einen Allpaß verwendet, der dafür sorgt, daß auch die dritte Harmonische der Netzgrundfrequenz, die durch die nichtlineare Magnetisierungskurve der Drehfeldmaschine 2 erzeugt wird, so gedreht wird, daß auch sie sich bei der Überlagerung mit dem Signal aus dem Signalpfad 52 auslöscht. In der überwiegenden Mehrzahl der Fälle genügt es jedoch, wenn die oben genannte Phasenbedingung lediglich für die Grundfrequenz der speisenden Netzwechselspannung hergestellt wird, weil deren Amplitude um mehr als eine Größenordnung über den Amplituden der übrigen Frequenzsignale liegt.

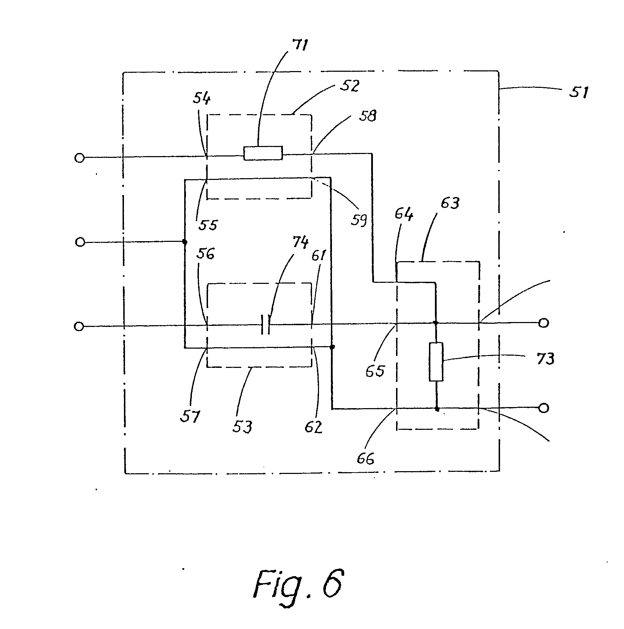

Fig. 6 zeigt das Schaltbild für einen derartigen Anwendungsfall, wobei der Signalpfad 52, wie bei Fig. 4, als Dämpfungseinrichtung lediglich den Längswiderstand 71 enthält, der zusammen mit dem Eingangswiderstand der Verknüpfungsschaltung 63 einen Spannungsteiler bildet, während der Signalpfad 53 anstelle des Längswiderstandes 72 einen phasenschiebenden Kondensator 74 enthält, der zusammen mit dem Querwiderstand 73 der Verknüpfungsschaltung 63 einen Hochpaß bildet.

Wenn die zu überwachende Drehfeldmaschine 2 symmetrische Wicklungen aufweist, gilt für die passiven Bauelemente des Netzwerkes 51 die folgende Dimensionierungsvorschrift:

$$1/(\omega C) = R_L$$

und

$$tg\varphi = (\omega C)/R_Q,$$

wobei $R_L$ den Wert des Widerstandes 71, C die Kapazität des Kondensators 74, $R_Q$ den Wert des Widerstandes 73 und $\omega$ die Kreisfrequenz der speisenden Netzwechselspannung bedeuten. Der Quotient aus $R_Q$ und $\omega C$ muß dabei für ein dreiphasiges Drehstromnetz so gewählt werden, daß sich $\varphi$ bei der Netzfrequenz zu 60° ergibt.

Sind diese Bedingungen erreicht, dann sind die Frequenzsignale, die durch die Netzwechselspannungen an den beiden Strängen 3 und 5 erzeugt werden, um 180° gegeneinander in der Phase gedreht und löschen sich in der Verknüpfungsschaltung 63, nämlich dem Querwiderstand 73, aus, während alle anderen Signale die Verknüpfungsschaltung 63 mehr oder weniger geschwächt passieren. Da das Frequenzsignal, das durch die Ankernuten hervorgerufen wird, eine größere Amplitude aufweist als die dritte Oberwelle der Netzfrequenz, folgt die nachgeschaltete Schaltstufe 21 bei entsprechender Wahl der Schaltpunkte, d.h. entsprechender Wahl der Schalthysterese, ausschließlich dem Frequenzsignal, das durch die Ankernuten erzeugt wird, so daß das Ausgangssignal an der Schaltstufe 21 wiederum der Drehzahl des Ankers proportional ist.

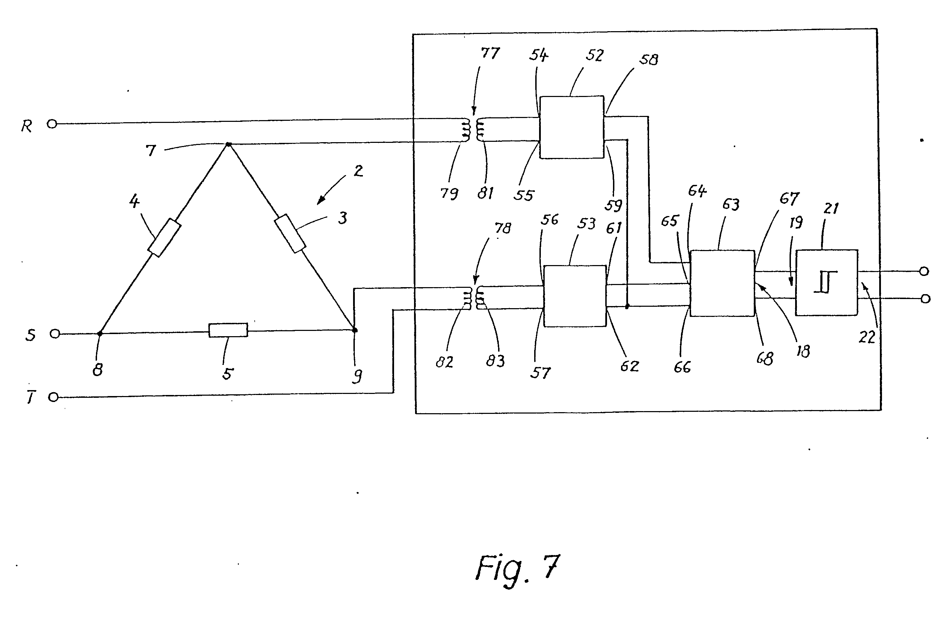

Wenn die Drehfeldmaschine 2 im Dreieck an das Drehstromnetz angeschlossen ist, muß das durch die Ankernutung hervorgerufene Frequenzsignal über Stromwandler, die primärseitig in zwei Stromzuleitungen zu der Drehfeldmaschine 2 geschaltet sind, ausgekoppelt werden, wie dies Fig. 7 zeigt.

Die Schaltungsanordnung 50 zur Erzeugung des drehzahlproportionalen Signals enthält deshalb, abweichend von dem Ausführungsbeispiel nach den Fig. 5 und 6, zwei Stromwandler 77 und 78 mit jeweils galvanisch voneinander getrennten Primär- und Sekundärseiten 79, 81 bzw. 82 und 83. Die Primärseite 79 des Stromwandlers 77 liegt zwischen der Phase R des Drehstromnetzes und dem zugehörigen Anschluß 7 der Drehfeldmaschine 2, während die Primärseite 82 des Stromwandlers 78 zwischen der Phase T und dem Anschluß 9 eingeschaltet ist. Mit seiner Sekundärseite 81 liegt der Stromwandler 21 an den Eingangsklemmen 54 und 55 des Signalpfades 52, während die Sekundärseite 83 des Stromwandlers 78 an die Eingangsklemmen 56 und 57 des Signalpfades 53 angeklemmt ist. Auf diese Weise wird den beiden Signalpfaden 52 und 53, die im übrigen, wie vorher beschrieben, aufgebaut sind, eine den Phasenströmen proportionale Spannung zugeführt, die zusätzlich zu dem Frequenzsignal, das von der Netzwechselspannung herrührt, bzw. deren harmonischen Oberwellen, auch das Frequenzsignal enthält, das durch die Ankernuten hervorgerufen wird. Wie oben beschrieben, wird bei der erläuterten Dimensionierung des Netzwerkes 51 das Frequenzsignal mit der Frequenz der Netzwechselspannung unterdrückt, so daß am Ausgang 18 des Netzwerkes 51 im wesentlichen nurmehr das durch die Ankernuten hervorgerufene Frequenzsignal ansteht, das unmittelbar der Ankerdrehzahl proportional ist und die nachfolgende Schaltstufe 21 steuert.

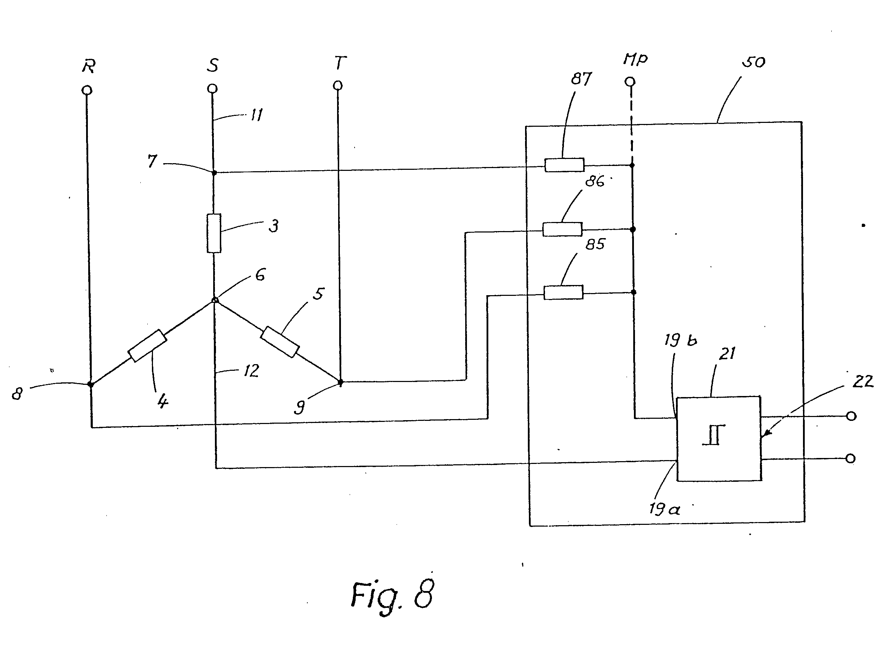

Gemäß Fig. 8 kann das drehzahlproportionale Frequenzsignal bei einer im Stern geschalteten dreiphasigen Drehfeldmaschine 2 auch dadurch erzeugt werden, daß der nicht mit dem Netzmittelpunkt verbundene Sternpunkt 6 an eine der Eingangsklemmen 19a der Schaltstufe 21 mit Schmitt-Trigger-Charakteristik angeschlossen ist, während der andere Eingang 19b an der Verknüpfungsstelle dreier Widerstände 85, 86 und 87 liegt, wobei jeder der Widerstände 85 bis 87 an einer zugehörigen Phase R, S oder T des dreiphasigen Drehstromnetzes angeklemmt ist.

Der Eingang 19b der Schaltstufe 21 bildet auf diese Weise einen künstlichen Sternpunkt als Bezugspunkt gegenüber dem an dem Sternpunkt 6 der Drehfeldmaschine 2 das durch die Ankernuten erzeugte Frequenzsignal als Wechselspannung entsteht, die über den Eingang 19a der Schaltstufe 21 zugeführt wird. Die Schaltstufe 21 wandelt das eingespeiste Frequenzsignal in ein Rechtecksignal gleicher Frequenz und konstanter Amplitude um, so daß an dem Ausgang 22 der Schaltstufe 21 wiederum das der Ankerdrehzahl proportionale Frequenzsignal zur weiteren Verwendung abgegriffen werden kann.

Falls bei dem Drehstromnetz, an dem die Drehfeldmaschine 2 betrieben wird, auch der Mittelpunkt mitgeführt ist und keine größeren Störsignale führt, so können die Widerstände 85 bis 87 entfallen und stattdessen der Eingangseinschluß 19b der Schaltstufe 21 unmittelbar an den Netzmittelpunkt $M_p$ angeschlossen werden, wie dies in Fig. 8 gestrichelt gezeichnet ist. Alle Schaltungen, die anstelle eines Filters mit einer Kompensationsschaltung für wenigstens die Grundfrequenz des Erregerstromes arbeiten, die in den Fig. 3 bis 8 dargestellt ist, ermöglichen die Erzeugung des drehzahlproportionalen Frequenzsignals aus der Grundfrequenz des durch die Ankernuten hervorgerufenen Frequenzsignals bis nahe hin zum Stillstand des Ankers, d.h. im Bereich der Frequenz des Erregerstromes.

Da im Motorbetrieb der Drehfeldmaschine 2 die Amplitude der Grundfrequenz des durch die Nuten hervorgerufenen Frequenzsignals stark vom Schlupf abhängig ist, kann es je nach Anwendung zweckmäßig sein, zwischen den Ausgang 18 des Netzwerks 51 bzw. des Filters 16 und dem Eingang 19 der nachfolgenden Schaltstufe 21 ein Tiefpaßfilter zu schalten, dessen Grenzfrequenz knapp oberhalb der Grundfrequenz des durch die Ankernuten hervorgerufenen Frequenzsignals bei Nenndrehzahl liegt, um störende, höherfrequente Störungen, die eventuell eine störend große Amplitude aufweisen, zu unterdrücken. Als Tiefpaßfilter kommt ein Filter 6. Ordnung mit einer Dämpfung von 36 dB/Oktave infrage, das als aktives Filter aufgebaut ist. Der Aufbau und die Dimensionierung eines solchen Filters ist in der oben angegebenen Literaturstelle ausführlich beschrieben.

Bei allen Schaltungen nach den Fig. 3 bis 8 kann auch zwischen dem Ausgang 18 des Netzwerkes 51 und dem Eingang 19 der Schaltstufe 21 ein Hochpaßfilter zwischengeschaltet sein, mit dem Frequenzsignale, die durch das Netzwerk 51 nicht unterdrückbar sind, herausgefiltert werden, um eine Störung des Betriebs der nachfolgenden Schaltstufe 21 zu verhindern. Die Grenzfrequenz eines solchen Hochpaßfilters wird auf die untere Frequenzgrenze des jeweils auszuwertenden Frequenzbereiches für das Frequenzsignal, das durch die Ankernuten hervorgerufen wird, gelegt, oder die Grenzfrequenz kann auch bei der Grundfrequenz des Erregerstromes bzw. auf die zweite oder dritte Harmonische der Grundfrequenz des Erregerstromes gelegt sein.

## Patentansprüche

1. Schaltungsanordnung zum Messen der Drehzahl eines genuteten Ankers einer Drehfeldmaschine (2), bei der die Anzahl der Ankernuten kein ganzzahliges Vielfaches der Polzahl des Ständers ist, und die wenigstens zwei Stränge (3, 4, 5) im Ständer aufweist, von denen wenigstens einer von einem Strom durchflossen ist, wobei die Grundfrequenz des Erregerstromes für die Stränge (3, 4, 5) unterdrückt wird und die kennzeichnende Größe für die Drehzahl die Grundfrequenz des von den Ankernuten hervorgerufenen Frequenzsignals ist, dadurch gekennzeichnet, daß sie zum Abtrennen des Frequenzsignals ein Netzwerk (1) aufweist, in das die an wenigstens zwei Strängen (3, 4, 5) oder zwei Stromwandlern (77, 78) abgegriffenen Spannungen eingespeist und mit einer solchen Phase einander überlagert werden, daß lediglich die Frequenzanteile, die durch den Erregerstrom hervorgerufen werden, unterdrückt werden.

2. Schaltungsanordnung zum Messen der Drehzahl eines genuteten Ankers einer Drehfeldmaschine (2), bei der die Anzahl der Ankernuten kein ganzzahliges Vielfaches der Polzahl des Ständers ist, und die wenigstens zwei Stränge (3, 4, 5) im Ständer aufweist, von denen wenigstens einer von einem Strom durchflossen ist, wobei die Grundfrequenz des Erregerstromes für die Stränge unterdrückt wird und die kennzeichnende Größe für die Drehzahl die Grundfrequenz des von den Ankernuten hervorgerufenen Frequenzsignals ist, dadurch gekennzeichnet, daß die Drehfeldmaschine (2) wenigstens drei Stränge (3, 4, 5) aufweist, die im Stern mit einem Sternpunkt (6) geschaltet sind, und daß der Sternpunkt (6) zusammen mit einem Netzmittelpunkt bzw. einem künstlichen Sternpunkt (MP) einen Signalausgang bildet, an dem das der Drehzahl proportionale Frequenzsignal abgegriffen wird.

3. Schaltungsanordnung nach Anspruch 1, dadurch gekennzeichnet, daß das Frequenzsignal als Spannungssignal an einem Strang (3, 4, 5) abgegriffen wird.

4. Schaltungsanordnung nach Anspruch 1, dadurch gekennzeichnet, daß das Frequenzsignal an einem von dem Erregerstrom freien Strang (3, 4, 5) abgegriffen wird.

5. Schaltungsanordnung nach Anspruch 1, dadurch gekennzeichnet, daß das Frequenzsignal als Spannungssignal an zwei einenends miteinander verbundenen Strängen (3, 4, 5) abgegriffen wird.

6. Schaltungsanordnung nach Anspruch 1, dadurch gekennzeichnet, daß wenigstens ein Stromwandler vorgesehen ist, der in der Zuleitung für den Erregerstrom des jeweiligen Strangs (3, 4, 5) liegt und das Frequenzsignal abgibt.

7. Schaltungsanordnung nach Anspruch 1, dadurch gekennzeichnet, daß beide Stränge (3, 4, 5) von einem Erregerstrom durchflossen sind.

8. Schaltungsanordnung nach Anspruch 1, dadurch gekennzeichnet, daß keiner der Stränge (3, 4, 5) von einem Erregerstrom durchflossen ist.

9. Schaltungsanordnung nach Anspruch 1 oder 2, dadurch gekennzeichnet, daß der Erregerstrom durch sämtliche Stränge (3, 4, 5) fließt.

10. Schaltungsanordnung nach Anspruch 1, dadurch gekennzeichnet, daß der Erregerstrom zum Abbremsen des Ankers eine Gleichkomponente aufweist.

11. Schaltungsanordnung nach Anspruch 1 oder 2, dadurch gekennzeichnet, daß der Erregerstrom lediglich Wechselkomponenten enthält.

12. Schaltungsanordnung nach Anspruch 1 oder 2, dadurch gekennzeichnet, daß sie ein Hochpaßfilter (16) enthält, dessen Grenzfrequenz über der Grundfrequenz der Wechselkomponente des Erregerstromes liegt.

13. Schaltungsanordnung nach Anspruch 12, dadurch gekennzeichnet, daß die Grenzfrequenz bei dem Dreifachen der Grundfrequenz der Wechselkomponente des Erregerstromes liegt.

14. Schaltungsanordnung nach Anspruch 12, dadurch gekennzeichnet, daß das Hochpaßfilter (16) eine Steilheit von 36 dB/Oktave aufweist.

15. Schaltungsanordnung nach Anspruch 12, dadurch gekennzeichnet, daß das Hochpaßfilter (16) ein aktives Filter (25) mit einer Butterworth-Charakteristik ist.

16. Schaltungsanordnung nach Anspruch 2, dadurch gekennzeichnet, daß das Hochpaßfilter (16) mit seinem Eingang (17) parallel zu einem der Stränge (3, 4, 5) geschaltet ist.

17. Schaltungsanordnung nach Anspruch 12, dadurch gekennzeichnet, daß sie einen von einem der Erregerströme durchflossenen Stromwandler enthält, dessen Ausgang an den Eingang (17) des Hochpaßfilters (16) angeschlossen ist.

18. Schaltungsanordnung nach Anspruch 1, dadurch gekennzeichnet, daß das Netzwerk (51) zwei parallele, je einen Eingang (54, 55; 56, 57) aufweisenden Signalpfade (52, 53) enthält, die an eine in dem Netzwerk (51) vorhandene Verknüpfungsschaltung (63) mit einem Ausgang (18) angeschlossen sind.

19. Schaltungsanordnung nach Anspruch 18, dadurch gekennzeichnet, daß zumindest einer der Signalpfade (52, 53) eine frequenzunabhängige Dämpfungseinrichtung enthält, die derart bemessen ist, daß die Amplitude desjenigen Frequenzsignals mit der niedrigsten Frequenz, das durch den Erregerstrom hervorgerufen wird, gleich der Amplitude des entsprechenden Frequenzsignales ist, das über den jeweils anderen Signalpfad (52, 53) der Verknüpfungsschaltung (63) zugeführt wird.

20. Schaltungsanordnung nach Anspruch 18, dadurch gekennzeichnet, daß zumindest einer der Signalpfade (52, 53) einen Phasenschieber (74) enthält, der derart bemessen ist, daß das Frequenzsignal mit der größten Amplitude, die durch den Erregerstrom erzeugt wird, gegenüber dem entsprechenden Frequenzsignal das über den anderen Signalpfad (52, 53) der Verknüpfungsschaltung (63) zugeführt wird, um 180° gedreht ist.

21. Schaltungsanordnung nach Anspruch 20, dadurch gekennzeichnet, daß der Phasenschieber (74) als Spannungsteiler ausgebildet ist.

22. Schaltungsanordnung nach Anspruch 20, dadurch gekennzeichnet, daß jeder der Signalpfade (52, 53) einen Phasenschieber enthält.

23. Schaltungsanordnung nach Anspruch 18, dadurch gekennzeichnet, daß der eine Signalpfad (52) als frequenzunabhängige Dämpfungseinrichtung einen ohmschen Längswiderstand (71) und der andere Signalpfad (53) als Phasenschieber einen rein kapazitiven Längswiderstand (74) enthält, und daß die Verknüpfungsschaltung (63) aus einem ohmschen Querwiderstand (73) besteht.

24. Schaltungsanordnung nach Anspruch 18, dadurch gekennzeichnet, daß beide Signalpfade (52, 53) für das Frequenzsignal lediglich je einen ohmschen Längswiderstand (71, 72) enthalten und daß die Verknüpfungsschaltung (63) aus einem ohmschen Querwiderstand (73) besteht.

25. Schaltungsanordnung nach Anspruch 18, dadurch gekennzeichnet, daß je ein Eingang (54, 55; 56, 57) des Netzwerks (51) zu einem der Stränge (3, 4, 5) parallelgeschaltet ist, wobei beide Stränge (3, 4, 5) hintereinandergeschaltet und von einem gemeinsam Erregerstrom durchflossen sind.

26. Schaltungsanordnung nach Anspruch 18, dadurch gekennzeichnet, daß das Netzwerk (51) zwei Stromwandler (77, 78) enthält, von denen jeder eingangsseitig in einer Stromzuführungsleitung zu dem jeweiligen Strang (3, 4, 5) liegt und ausgangsseitig an einen Eingang (54, 55; 56, 57) eines zugehörigen Signalpfades (52, 53) angeschlossen ist.

27. Schaltungsanordnung nach Anspruch 18, dadurch gekennzeichnet, daß sie zur Drehzahlmessung eines im Stern geschalteten dreiphasigen Asynchronmotors (2) ein eingangsseitig mit den drei Phasen verbundenes Netzwerk (85, 86, 87) zur Erzeugung eines künstlichen Sternpunktes (19b) enthält.

28. Schaltungsanordnung nach Anspruch 1 oder 2, dadurch gekennzeichnet, daß sie eine Schaltstufe (21) zum Unterdrücken von Amplitudenschwankungen des abgetrennten, der Drehzahl proportionalen Frequenzsignales enthält.

29. Schaltungsanordnung nach Anspruch 28, dadurch gekennzeichnet, daß die Schaltstufe (21) zum Unterdrücken von nicht ausgefilterten bzw. in dem Netzwerk (51; 85, 86, 87) nicht kompensierten Störsignalanteilen ein mit einer Schalthysterese behaftetes Kippglied ist.

30. Schaltungsanordnung nach Anspruch 29, dadurch gekennzeichnet, daß die Schaltstufe (21) ein Schmitt-Trigger ist.

31. Schaltungsanordnung nach den Ansprüchen 12 oder 18, dadurch gekennzeichnet, daß die Schaltstufe (21) mit ihrem Eingang (19) an den Ausgang (18) des Filters (16) bzw. des Netzwerks (51; 85, 86, 87) angeschlossen ist.

32. Schaltungsanordnung nach den Ansprüchen 27 und 28, dadurch gekennzeichnet, daß die Schaltstufe (21) mit ihrem Eingang (19) zwischen dem künstlichen Sternpunkt (19b) und dem Motorsternpunkt (6) angeschlossen ist.

**Claims**

1. A circuit arrangement for measuring the speed of a slotted armature of an induction machine (2), in which the number of slots in the armature is not an integral multiple of the number of poles of the stator and which has at least two phase windings (3, 4, 5) in the stator, through at least one of which a current flows, the basic frequency of the energizing current for the phase windings (3, 4, 5) being suppressed and the characterizing value for the speed being the basic frequency of the frequency signal produced by the slots in the armature, characterized in that it has for the separation of the frequency signal a network (1) to which the voltages tapped at at least two phase windings (3, 4, 5) or two current transformers (77, 78) are fed, these voltages being superimposed on one another with a phase such that only those components of the frequency which are produced by the energizing current are suppressed.

2. A circuit arrangement for measuring the speed of a slotted armature of an induction machine (2), in which the number of slots in the armature is not an integral multiple of the number of poles of the stator and which has at least two phase windings (3, 4, 5) in the stator, through at least one of which a current flows, the basic frequency of the energizing current for the phase windings being suppressed and the characterizing value for the speed being the basic frequency of the frequency signal produced by the slots in the armature, characterized in that the induction machine (2) has at least three phase windings (3, 4, 5) which are star-connected to a star point (6), and the star point (6) together with a central point of the network and an artificial star point (MP) forms a signal output at which the frequency signal proportional to the speed is tapped.

3. A circuit arrangement according to claim 1, characterized in that the frequency signal is tapped as a voltage signal at a phase winding (3, 4, 5).

4. A circuit arrangement according to claim 1, characterized in that the frequency signal is tapped at a phase winding (3, 4, 5) free from the energizing current.

5. A circuit arrangement according to claim 1, characterized in that the frequency signal is tapped as a voltage signal at two phase windings (3, 4, 5) connected to one another at one end.

6. A circuit arrangement according to claim 1, characterized in that at least one current transformer is provided, which is disposed in the feed line for the energizing current of the particular phase winding (3, 4, 5) and delivers the frequency signal.

7. A circuit arrangement according to claim 1, characterized in that an energizing current flows through both phase windings (3, 4, 5).

8. A circuit arrangement according to claim 1, characterized in that an energizing current does not flow through any of the phase windings (3, 4, 5).

9. A circuit arrangement according to claims 1 or 2, characterized in that the energizing current flows through all the phase windings (3, 4, 5).

10. A circuit arrangement according to claim 1, characterized in that the energizing current has a direct component for decelerating the armature.

11. A circuit arrangement according to claims 1 or 2, characterized in that the energizing current contains solely alternating components.

12. A circuit arrangement according to claims 1 or 2, characterized in that it contains a high-pass filter (16) whose limit frequency is higher than the basic frequency of the alternating component of the energizing current.

13. A circuit arrangement according to claim 12, characterized in that the limit frequency is three times the basic frequency of the alternating component of the energizing current.

14. A circuit arrangement according to claim 12, characterized in that the high-pass filter (16) has a steepness of 36 dB/octave.

15. A circuit arrangement according to claim 12, characterized in that the high-pass filter (16) is an active filter (25) having a Butterworth characteristic.

16. A circuit arrangement according to claim 12, characterized in that the high-pass filter (16) is connected via its input (17) in parallel to one of the phase windings (3, 4, 5).

17. A circuit according to claim 12, characterized in that it contains a current transformer through which one of the energizing currents flows and whose output is connected to the input (17) of the high-pass filter (16).

18. A circuit arrangement according to claim 1, characterized in that the network (51) contains two parallel signal paths (52, 53) which each have an input (54, 55; 56, 57) and are connected via an output (18) to a combination circuit (63) incorporated in the network (51).

19. A circuit arrangement according to claim 18, characterized in that at least one of the signal paths (52, 53) contains a damping device which is independent of frequency and is so dimensioned that the amplitude of that frequency signal with the lowest frequency which is produced by the energizing current is equal to the amplitude of the corresponding frequency signal which is fed to the combination circuit (63) via the other signal path (52, 53).

20. A circuit arrangement according to claim 18, characterized in that at least one of the signal paths (52, 53) contains a phase shifter (74) which is so dimensioned that the frequency signal of maximum amplitude which is generated by the energizing current is rotated through 180° in relation to the corresponding frequency signal fed to the combination circuit (63) via the other signal path (52, 53).

21. A circuit arrangement according to claim 20, characterized in that the phase shifter (74) is constructed in the form of a voltage divider.

22. A circuit arrangement according to claim 20, characterized in that each of the signal paths (52, 53) contains a phase shifter.

23. A circuit arrangement according to claim 18, characterized in that one signal path (52) contains as a damping device independent of frequency an ohmic series resistor (71), and the other signal path (53) contains as a phase shifter a purely capacitive series resistor (74), and the combination circuit (63) comprises an ohmic cross resistor (73).

24. A circuit arrangement according to claim 18, characterized in that both signal paths (52, 53) contain for the frequency signal solely one ohmic series resistor (71, 72) each, and the combination circuit (63) comprises an ohmic cross resistor (73).

25. A circuit arrangement according to claim 18, characterized in that each input (54, 55; 56, 57) of the network (51) is connected in parallel to one of the phase windings (3, 4, 5), the two phase windings (3, 4, 5) being connected in series for passage of a common energizing current.

26. A circuit arrangement according to claim 18, characterized in that the network (51) contains two current transformers (77, 78), each of which is disposed on the input side in a current supply line to the particular phase winding (3, 4, 5) and is connected on the output side to an input (54, 55; 56, 57) of an associated signal path (52, 53).

27. A circuit arrangement according to claim 18, characterized in that it comprises for measuring the speed of a star-connected triple-phase asynchronous motor (2) a network (85, 86, 87) which is connected to the three phases for the production of an artificial star point (19b).

28. A circuit arrangement according to claims 1 or 2, characterized in that it contains a switch step (21) for suppressing variations in amplitude of the separated frequency signal proportional to the speed.

29. A circuit arrangement according to claim 28, characterized in that the switch step (21) for suppressing spurious signal components which have not been filtered out or have not been compensated in the network (51; 85, 86, 87) is a flip element subject to switching hysteresis.

30. A circuit arrangement according to claim 29, characterized in that the switch step (21) is a Schmitt trigger.

31. A circuit arrangement according to claims 12 or 18, characterized in that the switch step (21) is connected via its input (19) to the output (18) of the filter (16) and of the network (51; 85, 86, 87) respectively.

32. A circuit arrangement according to claims 27 and 28, characterized in that the switch step (21) is connected via its input (19) between the artificial star point (19b) and the motor star point (6).

**Revendications**

1. Montage pour mesurer la vitesse de rotation d'un induit à encoches d'une machine à champ tournant (2) dont le nombre des encoches d'induit n'est pas un multiple entier du nombre de pôles du stator et qui présente dans le stator au moins deux faisceaux (3, 4, 5) dont au moins un est traversé par un courant, la fréquence fondamentale du courant d'excitation pour les faisceaux (3, 4, 5) étant supprimée et la grandeur caractérisante pour la vitesse de rotation étant la fréquence fondamentale du signal de fréquence provoqué par les encoches de l'induit, caractérisé par le fait qu'il présente, en vue de la séparation du signal de fréquence, un réseau (1) dans lequel les tensions recueillies sur au moins deux faisceaux (3, 4, 5) ou deux transformateurs d'intensité (77, 78) sont injectées et superposées avec une phase telle que seules les composantes de fréquence provoquées par le courant d'excitation soient supprimées.

2. Montage pour mesurer la vitesse de rotation d'un induit à encoches d'une machine à champ tournant (2) dont le nombre des encoches d'induit n'est pas un multiple entier du nombre de pôles du stator et qui présente dans le stator au moins deux faisceaux (3, 4, 5) dont au moins un est traversé par un courant, la fréquence fondamentale du courant d'excitation pour les faisceaux (3, 4, 5) étant supprimée et la grandeur caractérisante pour la vitesse de rotation étant la fréquence fondamentale du signal de fréquence provoqué par les encoches de l'induit, caractérisé par le fait que la machine à champ tournant (2) présente au moins trois faisceaux (3, 4, 5) qui sont montés en étoile avec un point neutre (6) et que le point neutre (6) forme, conjointement avec un point neutre du réseau ou un point neutre artificiel (MP), une sortie de signal sur laquelle est recueilli le signal de fréquence proportionnel à la vitesse.

3. Montage suivant la revendication 1, caractérisé par le fait que le signal de fréquence est recueilli en tant que signal de tension sur un faisceau (3, 4, 5).

4. Montage suivant la revendication 1, caractérisé par le fait que le signal de fréquence est recueilli sur un faisceau (3, 4, 5) exempt de courant d'excitation.

5. Montage suivant la revendication 1, caractérisé par le fait que le signal de fréquence est recueilli en tant que signal de tension sur deux faisceaux (3, 4, 5) reliés entre eux à une extrémité.

6. Montage suivant la revendication 1, caractérisé par le fait qu'il est prévu au moins un transformateur d'intensité qui se trouve dans la ligne d'alimentation en courant d'excitation du faisceau respectif (3, 4, 5) et qui fournit le signal de fréquence.

7. Montage suivant la revendication 1, caractérisé par le fait que les deux faisceaux (3, 4, 5) sont traversés par un courant d'excitation.

8. Montage suivant la revendication 1, caractérisé par le fait qu'aucun des faisceaux (3, 4, 5) n'est traversé par un courant d'excitation.

9. Montage suivant la revendication 1 ou 2, caractérisé par le fait que le courant d'excitation traverse la totalité des faisceaux (3, 4, 5).

10. Montage suivant la revendication 1, caractérisé par le fait que le courant d'excitation présente une composante continue en vue du freinage de l'induit.

11. Montage suivant la revendication 1 ou 2, caractérisé par le fait que le courant d'excitation contient uniquement des composantes alternatives.

12. Montage suivant la revendication 1 ou 2, caractérisé par le fait qu'il contient un filtre passe haut (16) dont la fréquence limite est située au-dessus de la fréquence fondamentale de la composante alternative du courant d'excitation.

13. Montage suivant la revendication 12, caractérisé par le fait que la fréquence limite est de l'ordre du triple de la fréquence fondamentale de la composante alternative du courant d'excitation.

14. Montage suivant la revendication 12, caractérisé par le fait que le filtre passe haut (16) présente une pente de 36 dB/octave.

15. Montage suivant la revendication 12, caractérisé par le fait que le filtre passe haut (16) est un filtre actif (25) avec une caractéristique Butterworth.

16. Montage suivant la revendication 2, caractérisé par le fait que le filtre passe haut (16) est branché par son entrée (17) en parallèle avec l'un des faisceaux (3, 4, 5).

17. Montage suivant la revendication 12, caractérisé par le fait qu'elle contient un transformateur d'intensité qui est traversé par l'un des courants d'excitation et dont la sortie est reliée à l'entrée (17) du filtre passe haut (16).

18. Montage suivant la revendication 1, caractérisé par le fait que le réseau (51) contient deux trajets de signaux (52, 53) parallèles, présentant chacun une entrée (54, 55; 56, 57) et raccordés par une sortie (18) à un circuit de combinaison (63) se trouvant dans le réseau (51).

19. Montage suivant la revendication 18, caractérisé par le fait qu'au moins l'un des deux trajets de signaux (52, 53) contient un dispositif d'atténuation indépendant de la fréquence, qui est dimensionné de manière que l'amplitude de celui des signaux de fréquence qui a la plus faible fréquence et qui est provoqué par le courant d'excitation soit égale à l'amplitude du signal de fréquence correspondant amené par l'autre trajet de signaux (52, 53) au circuit de combinaison (63).

20. Montage suivant la revendication 18, caractérisé par le fait qu'au moins l'un des trajets de signaux (52, 53) contient un déphaseur (74) qui est dimensionné de manière que le signal de fréquence qui a la plus grande amplitude et qui est produit par le courant d'excitation soit déphasé de 180° par rapport au signal de fréquence correspondant qui est amené par l'autre trajet de signaux (52, 53) au circuit de combinaison (63).

21. Montage suivant la revendication 20, caractérisé par le fait que le déphaseur (74) est réalisé sous forme de diviseur de tension.

22. Montage suivant la revendication 20, caractérisé par le fait que chacun des trajets de signaux (52, 53) contient un déphaseur.

23. Montage suivant la revendication 18, caractérisé par le fait que l'un des trajets de signaux (52) contient, en tant que dispositif d'atténuation indépendant de la fréquence, une résistance longitudinale (71) ohmique et l'autre trajet de signaux (53) contient en tant que déphaseur une résistance longitudinale (74) purement capacitive, et que le circuit de combinaison (63) est constitué par une résistance transversale (73) ohmique.

24. Montage suivant la revendication 18, caractérisé par le fait que les deux trajets de signaux (52, 53) pour le signal de fréquence contiennent uniquement chacun une résistance longitudinale (71, 72) ohmique et que le circuit de combinaison (63) se compose d'une résistance (73) transversale ohmique.

25. Montage suivant la revendication 18, caractérisé par le fait qu'une entrée (54, 55; 56, 57) du réseau (51) est montée en parallèle avec chacun des faisceaux (3, 4, 5), les deux faisceaux (3, 4, 5) étant montés l'un derrière l'autre et traversés par un courant d'excitation commun.

26. Montage suivant la revendication 18, caractérisé par le fait que le réseau (51) contient deux transformateurs d'intensité (77, 78) dont chacun est disposé, côté entrée, dans une ligne d'alimentation en courant pour le faisceau respectif (3, 4, 5) et est relié côté sortie à une entrée (54, 55; 56, 57) d'un trajet de signaux associé (52, 53).

27. Montage suivant la revendication 18, caractérisé par le fait qu'il contient, pour la mesure de vitesse d'un moteur asynchrone (2) triphasé en étoile, un réseau (85, 86, 87) relié côté entrée aux trois phases, en vue de la production d'un point neutre artificiel (19b).

28. Montage suivant la revendication 1 ou 2, caractérisé par le fait qu'il contient un étage de commutation (21) pour la suppression des variations d'amplitude du signal de fréquence séparé, proportionnel à la vitesse.

29. Montage suivant la revendication 28, caractérisé par le fait que l'étage de commutation (21) pour la suppression de composantes de signaux parasites non filtrées ou non compensées dans le réseau (51; 85, 86, 87) est un élément basculeur affecté d'une hystérésis de commutation.

30. Montage suivant la revendication 29, caractérisé par le fait que l'étage de commutation (21) est une bascule de Schmitt.

31. Montage suivant la revendication 12 ou 18, caractérisé par le fait que l'étage de commutation (21) est relié par son entrée (19) à la sortie (18) du filtre (16) ou du réseau (51; 85, 86, 87).

32. Montage suivant les revendications 27 et 28, caractérisé par le fait que l'étage de commutation (21) est relié, par son entrée (19), entre le point neutre artificiel (19b) et le point neutre de moteur (6).

Fig. 1

*Fig. 2*

Fig. 3

Fig. 4

*Fig. 5*

EP 0 143 331 B1

Fig. 6

Fig. 7

EP 0 143 331 B1

Fig. 8

EP 0 143 331 B1